# EUROPEAN PATENT SPECIFICATION

(11) **EP 3 420 284 B1**
(45) Date of publication and mention of the grant of the patent: **20.04.2022**
(21) Application number: 17755882.2
(22) Date of filing: 22.02.2017
(51) Int. Cl.: F24F 12/00, F24F 5/00, F25B 13/00, F24F 1/0007, F25B 30/02, F24F 140/12, F24F 140/20

(54) **ECOLOGICAL ARRANGEMENT FOR ENERGY EFFICIENCY IMPROVEMENT**
ÖKOLOGISCHE ANORDNUNG ZUR VERBESSERUNG DER ENERGIEEFFIZIENZ
AGENCEMENT ÉCOLOGIQUE POUR LE PERFECTIONNEMENT DU RENDEMENT ÉNERGÉTIQUE

(30) Priority: 22.02.2016 FI 20165135
(43) Date of publication of application: 02.01.2019
(73) Proprietor: Suomen Ilmastointi Ja Savunpoisto Oy, 40950 Muurame (FI)
(72) Inventor: TOPPINEN, Esa, 40950 Muurame (FI)
(74) Representative: Heinonen & Co
(86) International application number: PCT/FI2017/050116
(87) International publication number: WO 2017/144779

(56) References cited:
- EP-A2- 1 614 973
- EP-A2- 2 314 937
- EP-A2- 2 463 597
- CA-A- 1 111 267
- FI-A- 20 050 025
- JP-A- S58 127 069
- US-A1- 2002 164 944
- US-A1- 2010 307 733

## Description

### FIELD OF TECHNOLOGY

In a very general level, embodiments of the invention relate to heat exchange. More specifically, the embodiments relate to heat pump, and even more specifically to improvement of energy efficiency of heat pumps, that comprise an arrangement to reduce the energy consumption, according to a preamble part of an independent patent claim directed to the arrangement. The invention relates also to heat pump and to an air conditioning apparatus utilizing such a pump.

### BACKGROUND

In very hot climatic conditions, such as those in Tropic or Mediterranean areas, the temperature may rise extremely high, even over 40 °C or 50 °C, in which the inhabitants in the area may need cooling, for a mere survival in such temperatures, especially if/when the humidity is near 100%.

Air conditioning devices have been used to mitigate the conditions, and to lower the temperatures inside the buildings for the residences on such hot areas. However, millions of households that use such devices need a respective massive energy production for the operation of the devices.

One common device to make-up indoor climates is a traditional heat pump. In such a device the operation is based on a heat exchange fluid handling, being compressed and allow to expand in an alternating manner as for example in refrigerators that are used for food supplies, the heat transference cycle of which being allowed to be implemented by the heat transference fluid.

In such devices, to remove the heat, the heat is arranged to be transferred via the heat transference fluid from the site to be cooled to another site, that is heated by the heat transferred by the heat transference fluid. Such a heat pump, that is arranged to operate by a volume and/or a circulating liquid, as a refrigerator for the needs of the food supply industry, comprises as a cooling volume the enclosable interior part of the refrigerator, wherein the heat removal part has been placed behind the refrigerator or beneath it.

A similar kind of a technique can be optimized for operation in domestic households for cooling the apartment. However, the circulation of the heat exchange fluid requires much energy, to be produced from outside. It is easy to imagine that for a constant amount of heat transference fluid, a larger cooling need requires also a faster circulation too. Consequently more energy is needed for the faster circulation, thus the larger cooling effect with the energy corresponds that energy at the hot end heat to be dissipated at the hot end of the heat pump.

Thus, at the hot zone mounting sites the heat pumps need more energy for the circulation than the same pumps at the cooler zone mounting sites. Heat pumps are generally solidly mountable, and cannot thus be taken with the residence to another location, in which the conditions are determined according to the geographic location.

Patent publications EP2463597A2, EP2314937A2, EP1614973A2, JPS58127069A and FI20050025A disclose known techniques as such, at an accordance to the preamble part of the claim 1.

### SUMMARY

It is an object of the invention to save energy of the heat pumps in use. This is achieved by embodiments of the invention.

According to the invention, an arrangement for reducing the energy consumption of a heat pump is defined in appending claim 1 and is characterized in that what has been said in the characterizing part of said independent patent claim.

According to an embodiment of the invention the heat effect is cooling by the indoor air, when the outer head is the hot end of the heat pump, in other words, the end in which heat is dissipated away from the apparatus.

According to an embodiment of the invention the heat effect is heating by the indoor air, when the outer head is the cool end of the heat pump, in other words, the end from which heat is taken to the space to be heated, for example for delivery to an apartment.

According to an embodiment of the invention the arrangement comprises such an air conditioning channel connector arranged for connecting the air conditioning channel to a split-type air-heat pump, for arrangement of an embodied arrangement according to an embodiment of the invention, when there between the indoor air sink and the part of the heat pump in which the heat effect is intended to occur, there is a temperature difference.

According to an embodiment the heat control effect of the heat pump is at least one of the following: a first heat control effect and a second heat control effect, wherein the first heat control effect and/or the second heat control effect is selectable from the following: heating , cooling, and/or holding the temperature. In such a case the apartment or a similar (cellar, attic, shelter, caravan, a cabin of a boat or a ship), the heat control effect in the apartment or similar in which there is an inner head, is often opposite to the heat control effect at the outer head, especially when in the apartment or similar the temperature is changed and/or is changing by the influence of the heat pump towards a set equilibrium state. In practice, however, the heat transference to occur between the heat pump and outdoor air, in connection to the heat control effect, does not practically change the outdoor temperature, although the at the very vicinity of the heat exchange surface of the outer head the temperature may change, by the heat effect.

According to an embodiment of the invention, a tube though-wall to the outer unit is operative at its simplest as a valve. According to an embodiment of the invention in such an integrated heat exchange arrangement a tube is a tube to the heat exchanger part of the outer head

According to an embodiment variant of the invention, closing and/or adjustment valves are used as the valves in the flow line to control the medium flows.

According to an embodiment of the invention the arrangement comprises a connection to a blower and/or fan to be mounted in connection to the mentioned air conditioning channel.

According to an embodiment the arrangement has such a connection to a blower and/or to a fan, that is at the indoor sink side and/or outer head side and/or there between at the mentioned air conditioning channel.

According to an embodiment of the invention the arrangement comprises a control center, for a control by a mobile device in co-operation with the actuators of the arrangement for the control of the arrangement, via the user interface of the mobile device, over an information network to the said control center.

According to an embodiment of the invention the control center is a control center of a heat pump or an air conditioning apparatus that comprises a heat pump.

An arrangement according to an embodiment of the invention is comprised in a heat pump according to an embodiment of the invention. A heat pump according to an embodiment of the invention, comprises an inner head and outer head, as well as a channel for circulation of the medium, for heat transference there between said inner head and outer head, comprising additionally at the outer head a connection to air conditioning channel for leading indoor air from an indoor sink to outer head to provide a heat effect by the air conditioning channel led indoor air.

According to an embodiment of the invention the heat pump has such a structure that said outer head and said inner head are integrated into a wholeness in a same casing, wherein the indoor air sink has been arranged to be at the casing and/or with help of a tube, from an apartment or the volume part thereof.

According to an embodiment of the invention the inner head and outer head, are separated apart by an insulation, but integrated into the same casing.

According to an embodiment of the invention the heat pump has such a structure that at least one of said inner head and outer head has been insulated from the rest of the wholeness, for preservation of the temperature of the medium in the flow of the air conditioning channel between the inner head and outer head, in the temperature according to the indoor air sink, before the arrival of the flow to the outer head.

According to an embodiment of the invention the heat pump has been arranged to be mounted on a roof, for example by a mounting-location-specific assembly kit, wherein for connecting the heat pump, the kit has a connection, to connect the flow line from the heat pump to the indoor air sink at the room volume.

According to an embodiment of the invention the flow line has been arranged into heat exchange communication with a smoke channel, for recovery of the smokeborne heat for heating the substance flowing in the flow channel. According to an embodiment variant, the outer head has been arranged at the smoke channel to dissipate the heat into the smoke channel. Consequently remarkable savings in space can be achieved, if the smoke channel were available, and there were no need to lead a long tube to the outer wall, so that in a favorable case, having the flow channel tube as quite short and thus avoid the pressure losses caused by longer tubes.

According to an embodiment of the invention the heat pump comprises a valve arrangement to switch mutually the inner head and outer head in their locations of the the circulation process of the medium.

According to an embodiment of the invention the heat pump comprises a dehumidification unit arranged to remove water from the flow of the air conditioning channel in the flow direction, according to an embodiment variant before said outer head of the heat pump. According to an embodiment of the invention such a dehumidification unit comprises a phase transition surface for phase transition of water between gaseous and liquid phases, in accordance of the phase transition surface temperature, in the set temperature by phase transition specific temperature setting means according to the set heat effect of the phase transition surface. Consequently freezing of the heat pump or a channel connected there to can be avoided.

A heat pump according to an embodiment of the invention comprises at its outer head a connection to an air conditioning channel for indoor air to be lead form an indoor air sink to the outer head for providing a thermal effect therein for improvement of the COP -quantity of the heat pump.

A heat pump according to an embodiment of the invention comprises a self-diagnostic circuit for maintenance and service need detection and reporting over an information network.

According to an embodiment of the invention the maintenance relates to such maintenance activity as exchange of the medium and/or fill. According to an embodiment variant the maintenance activity is an exchange of air cleaning filter in an air conditioning channel, a cleaning operation in the inner head, in the outer head or in the both. According to an embodiment of the invention the maintenance activity is a dehumidification service and/or leak localization as based on a pressure measurement.

According to an embodiment of the invention the need for cleaning of the air cleaning filter is determined by a time series of pressure measurements, as based on the filter pressure loss change, as based on the saved measurement data in the control center of communication, that is obtained therein by the present microprocessor, memory, and permanent memory, which are arranged for storing measurement data, saving the operation parameters, operational series and/or programs to be saved, in suitable part.

According to an embodiment of the invention the heat pump can be so arranged that at least one of the following: outer head and inner head comprises, in connection to inner head and/or outer head, an air intake channel for leading outdoor air via the inner head and/or outer head, respectively, wherein the leading via inner head leads the air to be lead as replacement air to indoors, but via outer head to outdoors.

The viability of the embodiments of the invention is based on many aspects. Especially mechanical implementation as such in the basic form of embodiment with an air conditioning channel is extremely simple and operative also within such heat pumps, which do not have a prerequisite connection to the air conditioning channel to the indoor air sink. According to an embodiment of the invention such a connection can be made as tailored to heat pumps in a heat pump specific way, by the known dimensions. Consequently, in the manufacturing, the varying dimensional standards of the air conditioning channels can be considered, as well as the potential need of a blower or fan to be attached to the air conditioning channel and/or connection, to provide an indoor air flow from the indoor air sink, in the channel to the outer head, assisted with the help of the fan. If the channel is very long, i.e. at the magnitude of the pressure increase of the fan, the loss can be compensated, and the flow increased, also at the intake side of the flow, at the indoor air sink side of the channel.

For example, a user of a heat pump according to an embodiment of the invention may notice that the heat pump were needing service, although he/she is not present at the residence, when a program maintained resident in the memory of the communication center notices that there were an existing need for service. The noticing is based on the sensor based measurement implementation in which the arrangement executes in association to the heat pump operations as measuring such quantities as flows, temperatures and/or pressures, at the locations of outer head, inner head and/or medium.

With help of the invention, it is possible to embody in prevention of odor spreading, to an apartment from its inner WC, by using an extraneous heat pump to the apartment, or by an air conditioning device comprising such heat pump.

In the application text, number is denoting an integer number starting from one, for example, one, two or three.

An ensemble denotes to a group formed by the members, wherein the number of the members is expressed by an integer starting from number two.

The word comprise has been used as an open expression, consequently the meaning of sentences using such, should be understood as made in accordance of the open expression.

### FIGURES

In the following, embodiments of the invention are explained in a further detail by citing to Figs illustrating examples of embodiments. Measures and/or geometry of the illustrated details are not limited only to the shown examples. Same reference numerals has been used in the Figs for citing similar kind of parts, although it is not necessary that they were completely identical among the Figs, but can deflect from each other as skilled persons in the field understand. The embodiments of the invention are combinable in suitable part.
- Fig. 1: illustrates examples on embodiments of the invention,
- Fig. 2 and 3: illustrate embodiments of the invention,
- Fig. 4: illustrates heat exchange in inner and outer heads of a split type heat pump,
- Fig. 5: illustrates optional embodiments to position an indoor air sink,
- Fig. 6: illustrates an embodied integrated heat pump, and
- Figs 7 and 8: illustrate, via the details, embodiments of the invention.

### DESCRIPTION OF AN ENSEMBLE OF EXAMPLES ON EMBODIMENTS OF THE INVENTION

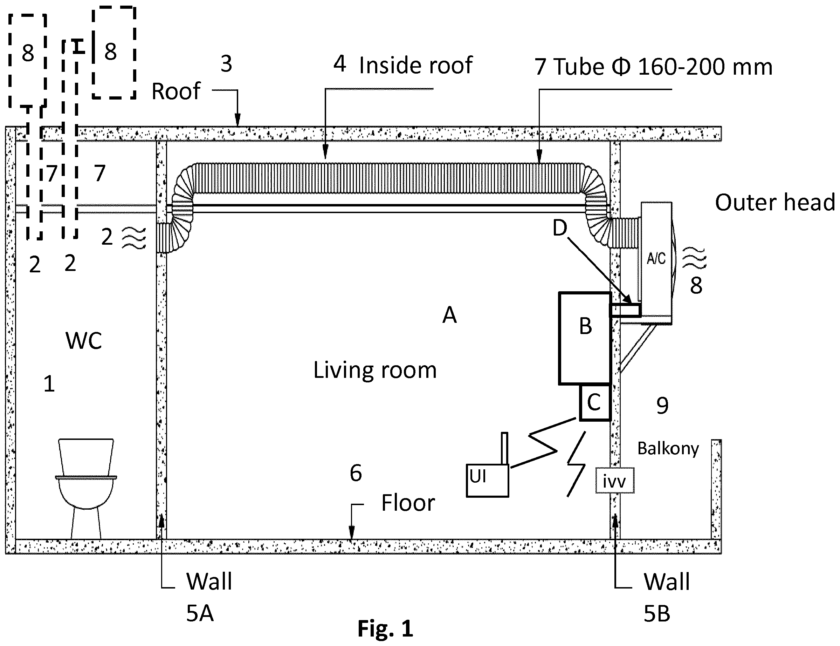

Examples on embodiments in accordance of the invention are illustrated in Fig 1. Therein, there is an apartment with a living room A and WC 1, and an air conditioning device, which operates according to the heat pump principle for transference of heat between an indoor location and an outdoor location. The apartment is only an example, and does not limit the accordance of the houseroom only to the shown example. Thus, the air pump apparatus is of a split type, in which there between the inner head B and outer head 8 there is a channel D for leading a heat transference fluid, medium, in a two direction movement there between said inner head and outer head for heat transference when the apparatus is in operation.

In the following, D is citing the channel, but also heat transference fluid, medium, intended to flow in the channel, in operation or in preparedness for operation. In the example of Fig 1 the inner head B has been configured to collect heat into a heat collection circuit to circulate, wherein the removing the heat from the apartment is cooling the apartment. Thus, heat of the apartment is transferred via the heat exchange surface of the inner head B to the heat transference fluid D, to be further transferred with it to the heat exchanger of the outer head 8. The medium is lead from the channel D to the outer head 8 and to its heat exchanger, from which via the heat exchange surface the heat is lead to the outdoor air. Consequently the outer head 8 in certain sense in a marginal way is heating the outer air locally. The heat exchanging can be promoted in an embodiment by fan, whose air flow has been directed via the heat exchange surfaces and/or heat dissipating surfaces. In other words, the split heat pump arrangement according to the Fig 1 transfers heat from the inner head B by means of a medium fluid in the channel D via it to the outer head 8. Consequently the apartment is cooling in a way that is dependent on the scaling of the device in operation and thus the heat handling capacity.

The dashed lines in Fig 1 are illustrative of some alternative examples to mount the outer head 8 according to an embodiment of the invention with a flow channel 7, into a flow communication with the indoor air sink 2, onto the roof of an exemplary apartment (having a living room A, and WC 1), by an assembly kit (the inner head B of the air conditioning device according to an embodiment of the invention has not been drawn into the conformity of the dashed line embodied examples of Fig 1). The mounting can be thus made by a straight formed flow channel connection or by a bent flow channel. Although a WC 1 has been shown in the example as an embodied location for an indoor air sink 2, when necessary, it is possible to mount the indoor air sink 2 to other parts of the apartment by facilitation of the formation of the flow channel 7 and/or its running path, as a skilled person very well knows on the basis of the embodiments. The apartment has walls, such as illustrated by the reference numbers 5A, 5B, there between the roof 3 and floor 6. The apartment has also a ceiling 4, with help of which wires, cables and/or tubes being used in air conditioning and/or within the embodiments can be hided. The apartment does not need to be hermetically insulated from the external world, not more than an ordinary human dwellings at the geographic location of the heat pump utilizing area were, but it is quite clear that thermal insulation would yield better results with a smaller power in heating as well as in cooling than yield without any insulation at all. Consequently it is advantageous for energy savings if the walls, floor and/or roof of the apartment confine heat and can preserve the temperature difference to the outdoor air by the assistance of the heat pump operation and/or via the operation.

There is a tube, as being illustrated in the ceiling 4, run between the outer head 8 of the heat pump, that is operating as an air conditioning apparatus, and the indoor air sink 2 location in the WC 1. The indoor air sink 2 has been thus illustrated as a suction point, through which air is sucked into the tube 7. According to an embodiment variant, the rest of the apartment can be in overpressure in respect to the sink 2 at the mouth of the tube 7, so that suction as such is not needed, but the indoor air flows into the tube 7 because of the prevailing pressure difference. Thus, the air also in living room A is drifting to the WC1, wherein the potential odors from the WC are prevented to drift themselves to the living room A.

In Fig 1 the tube 7 diameter (100-160 mm) has been illustrated as examples, but the example is not intended to limit the embodiments only to the shown example of the diameter range. The tube can be also round in shape of the cross-section, but also rectangular and/or square, in suitable parts. Square formed tube utilization facilitates gaining a slightly larger cross-section area, and consequently smaller pressure loss than with such a round tube whose diameter were the same as the side of the square tube as cross sectioned. Anyhow, the local construction regulations on ventilation define the tube metrics to be used via the flow running therein, with the provision that the construction regulations concern the ventilation.

The cooled air, originating to the living room, is lead with the tube 7 towards the outer head 8, where there is a fan in use. The heat-exchange surfaces of the outer head 8 are cooled because of the effect brought up by cooler indoor air flow, directed thereon, that originates to the indoor air sink 2, and consequently change the temperature of the hot side 8 of the heat pump downwards. Correspondingly the circulation speed of the medium of the heat pump can be adjusted to slower speed, wherein energy is saved in the heat exchange at the secondary circuit because of the lower temperature, when the heat exchange is occurring at a lower temperature than without the cooling effect of the indoor air.

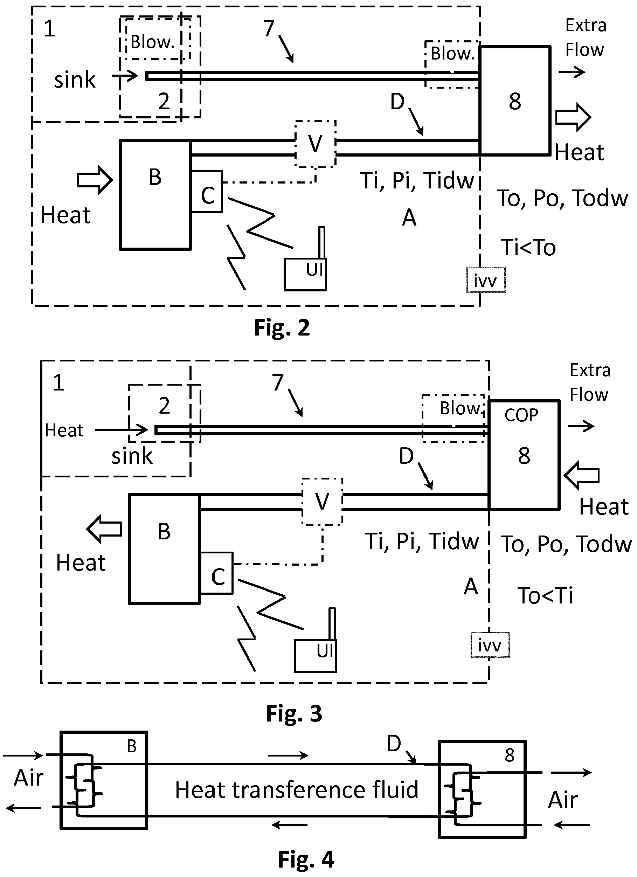

In Fig 1 iw is illustrating (also in Figs 2 and 3) an air exchange means or a similar channel for bringing air compensation into the apartment. According to an embodiment variant of the invention, the outdoor air through leaking structures can provide the air compensation. According to an embodiment variant the air exchange means can be formed by a ventilation valve and/or ventilation apparatus.

In hermetically closed buildings a corresponding channel can be implemented by an outdoor air import machine that is taking the outdoor air in. Machine produced compensation air can be processed, i.e. the compensation air temperature, pressure and/or humidity can be matched to the set values of the apartment at the import of the air compensation. The air compensation import can be made to the other rooms of the apartment or only of them or into corresponding space. In such conditions the exiting air out of the WC directed to the channel 7 defines how much compensation air can be brought to the WC space from somewhere else than from the other rooms of the apartment. According to an embodiment variant of the invention the incoming air is filtrated to remove the impurities to enter. According to an embodiment variant also the outgoing air is filtrated to prevent the fan surfaces getting dirty and thus to prevent the bearings of the heat pump being exposed to a wear out caused as a consequence of a loading by potentially long lasted contamination of the fan vanes in an out-of-balance rotation.

Figs 2 and 3 illustrate such embodiment variants of the invention in which the flow in the air conditioning channel 7 is used for increasing the energy efficiency of the heat pump, to produce a thermal effect, but in mutually different operations.

In the example of Fig 2, there are such embodiments illustrated, in which the thermal effect is cooling. In an example of Fig 3 there are illustrated such embodiments in which the thermal effect is heating, to increase the COP-quantity for the heat pump. In both exemplary cases the heat pump apparatus in the arrangement comprises an inner head B, flow channel D for the medium to transfer the heat therein between the inner head B and the outer head 8. In addition, in Figs of both exemplary cases there is an air conditioning channel 7 in accordance of an embodiment, with which the thermal effect is produced by the indoor air.

COP (Coefficient of Performance) has been considered as a dimensionless quantity, a thermal coefficient that is describing the efficiency of the heat transfer process of the heat pump as a ratio of the yield of the heat and the work to be made as needed for such, concerning heat releasing as well as receiving heat.

In the example in Fig 2, there is in the apartment A an indoor temperature Ti which is lower than the outdoor temperature To. The heat pump is used in cooling, i.e. to keep the situation as such, in which the Ti<To. Thus, the inner head B has been configured to receive heat, to be transported by the medium circulation in the channel D to the outer head 8, to be dissipated to the outdoor air. The heat pump comprises also the needed pump to circulate the medium in channel D for the heat transference in the channel, and the needed ordinary infrastructure to maintain the heat pump in operation. The direction of the flux of the heat energy has been illustrated with wide arrows. Corresponding the ends of the channel D, the heat pump has a heat exchanger at the outer head and inner head. The heat exchanger at the outer head is provided for exchanging heat between the environment and the heat exchange surface of the outer head, and the heat exchanger at the inner head is provided for exchanging heat between its environment and the heat exchange surface of the inner head, wherein heat can be transferred with the help of the medium in channel D, between the heat exchange surfaces of the inner head and the outer head.

The temperature and the pressure that has been illustrated with the corresponding letters T and P, that are provided with sub-indexes as follows so that i is denoting to indoor space and o is denoting to the outdoor space and dw is denoting to the dew point.

The mentioned quantities are measurable quantities with suitable transducers and/or sensors that can be used in the adjustment of the heat pump and/or control of the transducers of the heat pump.

In Figs 2 and 3 there are by dashed linings made enclosures that illustrate schematically the walls, roof, and floor of the apartment and/or such thereof. In similar way WC1 has been enclosed. At the indoor air sink 2 the dashed line and the narrow arrow illustrate example on such an embodiment in which there is a mounting location for a fan near the end of the tube 7, if/when such were needed according to the embodiment variant. Extra fan location at the opposite end of the tube 7 has been illustrated in Figs 2 and 3 with the dashed lines enclosed rectangles surrounding the word abbreviation Blow.

In Fig 3 there is shown an extra heat (Extra heat) that is not succeeded to be used in the heating of the outer head 8 of the heat pump, but is anyhow a part of the heat originating to the feed, of the indoor air sink 2, into the tube 7.

A skilled person in the art knows on the basis of the embodiments many other ways to bring a flow into the tube 7 by a fan, and thus there is no further illustration as such about the flow production.

Figs 2 and 3 illustrate also a control unit C, which is arranged to control the operations of the heat pump, heat exchange fluid, the medium flow control, making data loggings about the measurement quantities, and/or operational sequences and executing computer programs as well as for executing logical operations based on the measurement data, to control the heat pump operation.

Symbol UI is illustrating such an embodiment variant in which the control unit C is available for use by a user terminal UI, for example a mobile, tablet, or another portable terminal device.

The lightning-symbols between the control unit C and the terminal device UI are illustrating such an embodiment variant in which the connection has a wireless implementation, by using for example Wi-Fi, a Bluetooth version and/or Internet in the communications between the terminal device UI and the control unit C in the mutual information communication, for the measurement data and/or control signals to be conveyed to control and/or support the operation of the heat pump. Then, a heat pump according to an embodiment of the invention and/or an air conditioning device using such can be controlled via the control unit by conveying the control signals from the control center to the actuators of the heat pump. Correspondingly measurement data can be conveyed to the control center from the sensors, wherein the actuators of the heat pump can be control according to a feed-back loop principle. Actuators can be electromechanical valves, switches, dryers, fans, blowers, and/or pumps, switches and the actuators controlling their energy feed. According to an embodiment also the air flow in the air conditioning channel 7 can be controlled by the actuator such as a fan and/or iris shutter, when such has the suitable controlling electronics. According to an embodiment the control electronics comprises a wireless transmitter-receiver, to facilitate avoidance of the wired communication between the control center C and the cited actuator control electronics, when necessary.

The symbol V is illustrative of such an alternative embodiment of the invention in which there is a valve configuration to switch the thermal effects between the inner head B and outer head 8, from heating to cooling or vice versa. The optionality has been illustrated by the dashed lines. This switching can be made under the control unit C. According to embodiments of the invention, a skilled person in the art also knows that in such embodiments UIs can be used for the provision of the switching the direction, by the connection to the control unit C, so that the valve configuration valves V can be set for the selection of the heat transference direction, between a first heat transference direction and its opposite direction. According to an embodiment variant the valve configuration has such an ensemble of valves, that there are at least three directions, according to the positions of the heat exchangers, between which the heat is intended to get exchanged.

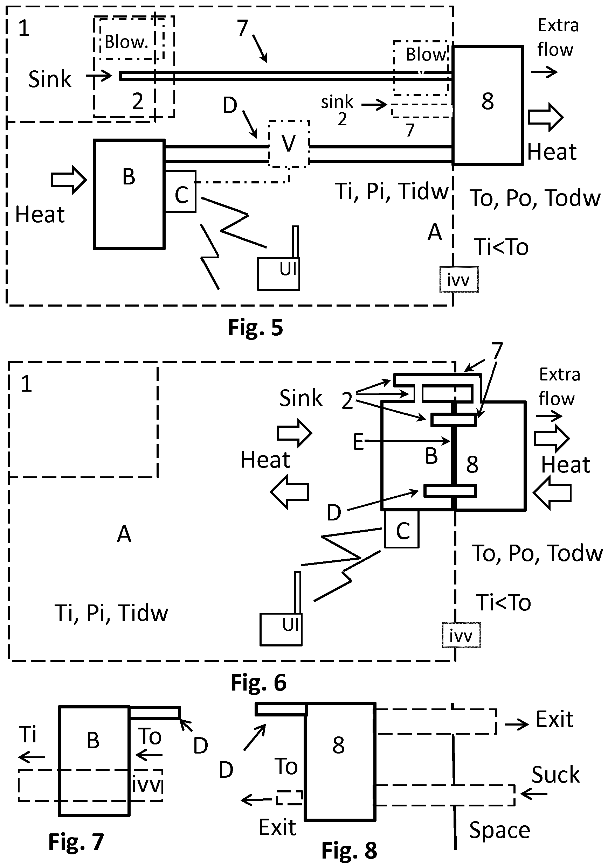

Fig 5 illustrating such an embodiment of the invention in which there is an indoor air sink 2 that can be located by a very short air conditioning channel 7 (alternatively or in addition) straight to the very near of the outer head 8. In that case the air conditioning channel 7 that is illustrated by a dashed line, can be very short air condition channel, made up by a short stump, mere hole at the accessory plate, wall lead-through part and/or connection to the outer head.

Fig 6 is illustrating such an ensemble of the embodiment of the invention on a split type heat pump, in which there is an outer head 8 and inner head B as integrated into one wholeness, that is intended for mounting to a boundary of an apartment and outdoor space, for instance to a wall or window, not to limit only to the mentioned.

In such a case at least one of the inner head B and outer head 8 has been isolated by a thermal insulation E from the rest of such part (B, 8) of the wholeness that changes the temperature of channel 7 and thus the temperature of the flow before its entry to the outer head 8.

An embodiment of the invention that is illustrated in Fig 6, is suitable for being mounted to a window for example, so that the inner head B is left to the apartment side of the mounting location, and the outer head 8 to outdoors. Broad arrows are illustrating heat transfer directions in accordance of the heat pump. The text Extra Flow is illustrating that part of the flow that exits the outer head. The embodiments as relating to the Fig 6 are not intended to limit indoor air sink 2 locating into the apartment and/or respect to the heat pump of Fig 6 only to the illustrated alternatives, but instead they can be also combined if necessary, also with other embodiment examples in other Figs as well in suitable part. Thus the air conditioning channel 7 can be integrated into the same outer casing with the outer head 8 and inner head B, but as well an extraneous channel in respect to the wholeness (B, D, 8) in suitable part. The air conditioning channel 7 can be implemented by a tube as well, whose flow has been matched to be low, so that the pressure drop corresponds a pressure of lower than 3000 water millimeters' pressure, more advantageously pressure of 1500 water millimeters, even more advantageously pressure of 500 water millimeters, and even further advantageously a lower pressure than 350 water millimeters.

According to an embodiment of the invention the channel D can be comprised in the heat exchanger into which it is connected to, in whole or in suitable part.

According to an embodiment of the invention, being illustrated schematically by a detail concerning an embodied indoor unit B in Fig 7, the air exchange means iw have been arranged to bring the compensation air partly or totally through the indoor unit B, in an embodied arrangement and/or in an embodied integrated heat pump using embodiment, so that the indoor unit B changes the temperature of the compensation air, either in the flow channel or by mixing it to the rest air flows of the indoor unit, when the compensation air temperature is changing from the outdoor temperature TO to indoor temperature Ti.

According to an embodiment of the invention, being illustrated by a schematic detail concerning an embodied outdoor unit 8 in Fig 8, the outdoor unit being arranged at least partly to take the suction air from the space Space, which is not necessarily an outer space, but can be for example attic space, under roof flat space, garage or similar, rossi-foundation between the soil and a floor, or another similar space that is thus not a living space of the apartment, but not neither outer space. Optional exhaustions into the space and/or out are marked to the Figs. Outer head 8 intake of suction air according to an embodiment of the invention, at least partly, has been illustrated by an arrow, rectangle, and reference suck. Consequently according to an embodiment variant of the invention, otherwise badly ventilating foundation structures can be ventilated, wherein for example detriments of Radon can be rejected, as a surprising additional effect thereof. Simultaneously outer head COP can remain better as constant, when the intake of the suction air by the outer head has been arranged quite well from a space of constant temperature, in such an embodiment variant.

The scope of the embodiments of the invention is defined by the following patent claims. However, a skilled person in the art knows from the embodiments of the invention, from the details thereof that they can be varied in the accordance of the inventive basic idea without leaving the scope of the claims.

## Claims

1. An arrangement for energy consumption reduction of a split type heat pump (8, D, B) in a heat controlling, wherein the heat pump of the arrangement comprises:
- a first heat handling part (B), inner head as indoor unit (B), being arranged to produce a first heat control effect inside a building, by transferring indoor air heat into a medium (D) in its first heat exchanger circulation in the inner head as indoor unit,
- a second heat handling part (8), outer head as outdoor unit (8), arranged to produce a second heat control effect outside the building (A), by transferring heat out from the medium (D) in the heat exchanger circulation, that is separate from said first heat exchanger circulation, but is in a heat exchange communication, by said medium (D), with said inner head as indoor unit (B), for transference of the heat, between said inner head as indoor unit (B) and outer head as outdoor unit, by the medium (D), wherein the arrangement comprises additionally at least an air conditioning channel (7) connection for an air conditioning channel (7), for arranging mounting of said air conditioning channel by said connection, to lead indoor air from indoor air sink (2) to outer head as outdoor unit (8) for a thermal effect being caused to it by the indoor sink led indoor air (A,2);
the arrangement being **characterized in that** in the arrangement there is a switching valve arrangement, comprising electro-mechanical switches and valves arranged to control indoor air flow and/or changing the medium flow direction and/or setting the magnitude, as based on at least one of the following observation / measurement quantities:
- temperature according to the inner head as indoor unit location
- temperature according to the outer head as outdoor unit location,
- medium temperature,
- pressure according to the inner head as indoor unit location
- pressure according to the outer head as outdoor unit location,
- dew point according to the inner head as indoor unit location
- dew point according to the outer head as outdoor unit location,
- medium flow rate,
- medium pressure,
- time and
- signal of a motion sensor as a presence signal of the user,
the arrangement furthermore comprises a control center (C) for controlling by a mobile device, in co-operation with the actuators of the arrangement to control the operation of the arrangement via the user interface of the mobile device (UI), over an information network connection to said control center (C),
wherein the control center of the arrangement is arranged to control actuators according to measurement data obtained by sensors as based on feedback principle, so that at least one of the actuators is selectable from the following: electromechanical valves, switches, dryers, fans, blowers, and/or pumps, switches and actuators controlling the energy feed of the just mentioned, furthermore air flow in the air conditioning channel (7) is controlled by the actuator such as a fan and/or iris shutter, when such has the suitable controlling electronics for their controlling.

2. The arrangement according to a claim 1 , **characterized in that** the arrangement comprises a connection additionally to blower and/or fan for the mounting it to the conformity of said air conditioning channel (7).

3. The arrangement according to a claim 1 or 2 , **characterized in that** the arrangement comprises at least such a connection to a blower and/or fan that is at an end of the indoor air sink (2) end and/or outer head as outdoor unit (8) end and/or there between them in the air conditioning channel (7).

4. The arrangement according to any one of the previous claims, **characterized in that** the arrangement comprises a control center (C) for controlling by a mobile device, in co-operation with the actuators of the arrangement to control the operation of the arrangement via the user interface of the mobile device (UI), over an information network connection to said control center (C).

5. A heat pump, **characterized in that** the heat pump comprises an arrangement according to any one of the claims 1-4.

6. The heat pump according to claim 5, **characterized in that** the heat pump has an inner head as indoor unit (B) and an outer head as outdoor unit (8) and a channel for medium circulation for transference of heat between said inner head as indoor unit (B) and outer head as outdoor unit (8), comprising additionally at its outer head as outdoor unit (8) a connection for an air conditioning channel (7) for leading indoor air from an indoor air sink (2) to outer head as outdoor unit (8) for providing a thermal effect by the indoor air (A, 2) led in said air conditioning channel (7).

7. The heat pump according to claim 5 or 6 , **characterized in that** said outer head as outdoor unit and said inner head as indoor unit are integrated together into wholeness in same chassis, wherein the indoor air sink (2) has been arranged in connection to the chassis and/or from the apartment (A) space or a part (1) thereof.

8. The heat pump according to claim 5, 6 or 7, **characterized in that** at least one of said inner head as indoor unit (B) and outer head as outdoor unit (8) has been thermally insulated from the said wholeness, for preservation of the temperature of the substance used in the in the air conditioning channel (7) between said inner head as indoor unit (B) and outer head as outdoor unit (8), in the temperature according to the indoor air sink (2) before the flow entry to the outer head as outdoor unit (8).

9. The heat pump according to claim 5, 6, 7or 8, **characterized in that** the heat pump comprises a valve arrangement (V) to mutually swap the circulation process locations of inner head as indoor unit (B) and outer head as outdoor unit (8) in the medium circulation.

10. The heat pump according to any one of claims 5 - 9, **characterized in that** the heat pump comprises a dehumidification unit arranged to remove water from the flow of the air conditioning channel (7), in direction of the flow, before said outer head as outdoor unit (8) of the heat pump.

11. The heat pump according to any one of claims 5 - 10, **characterized in that** the heat pump comprises in its outer head as outdoor unit (8) an air conditioning channel connection for an air conditioning channel (7), to conduct indoor air from the indoor air sink (2) to the outer head as outdoor unit (8) for providing a thermal effect in the outer head as outdoor unit (8) of the heat pump, for improvement of the COP-quantity of the heat pump.

12. The heat pump according to any one of claims 5 - 11, **characterized in that** the heat pump comprises a self-diagnostic circuit for observation of maintenance and service need and/or for reporting such over an information network between the control center and the used terminal (C, UI).

13. The heat pump according to any one of claims 5 - 12, **characterized in that** at least one of the following outer head as outdoor unit (8) and inner head as indoor unit (B) comprises at it (8, B) an air intake connection (ivv) for leading air via it (8, B), wherein the air conduction via the inner head as indoor unit (B) leads the air to be conducted to indoor space, but via outer head as outdoor unit (8) to outdoor space.

14. The heat pump according to any one of claims 5 - 13, **characterized in that** it is arranged for heating, cooling and/or preservation of temperature in pre-set value for an indoor space of a building.

## Patentansprüche

1. Anordnung zur Reduzierung des Energieverbrauchs einer Wärmepumpe vom Split-Typ (8, D, B) in einer Wärmesteuerung, wobei die Wärmepumpe der Anordnung umfasst:
- ein erstes Wärmehandhabungsteil (B), wobei der Innenkopf als Innenraumeinheit (B) derart angeordnet ist, dass er einen ersten Wärmeregulierungseffekt innerhalb eines Gebäudes erzeugt, indem er Raumluftwärme in ein Medium (D) in seinem ersten Wärmetauscherkreislauf im Innenkopf als Innenraumeinheit überträgt,
- ein zweites Wärmehandhabungsteil (8), Außenkopf als Außeneinheit (8), das so angeordnet ist, dass es einen zweiten Wärmeregulierungseffekt außerhalb des Gebäudes (A) erzeugt, indem es Wärme von dem Medium (D) im Wärmetauscherkreislauf nach außen überträgt, der getrennt von dem ersten Wärmetauscherkreislauf ist, jedoch in einer Wärmeaustauschverbindung durch das Medium (D) steht, mit dem Innenkopf als Innenraumeinheit (B) zur Übertragung der Wärme zwischen dem Innenkopf als Innenraumeinheit (B) und dem Außenkopf als Außeneinheit, durch das Medium (D),
wobei die Anordnung zusätzlich mindestens eine Klimakanal (7) -Verbindung für einen Klimakanal (7) umfasst, um die Befestigung des Luftklimakanals durch die Verbindung zu arrangieren, um die Raumluft von der Raumluftsenke (2) zum Außenkopf als Außeneinheit (8) zu leiten, damit eine thermische Wirkung durch die raumluftsenkengeführte Raumluft (A, 2) verursacht wird;
wobei die Anordnung **dadurch gekennzeichnet ist, dass** in der Anordnung eine Umschaltventilanordnung vorhanden ist, umfassend elektromechanische Schalter und Ventile, die zur Kontrolle des Raumluftstroms und/oder Austausch der Mediumfließrichtung und/oder Einstellung der Stärke, basierend auf mindestens einer der folgenden Beobachtungs-/Messgrößen angeordnet sind:
- Temperatur entsprechend dem Innenkopf als Standort der Innenraumeinheit
- Temperatur entsprechend dem Außenkopf als Standort der Außeneinheit,
- Mediumtemperatur,
- Druck entsprechend dem Innenkopf als Standort der Innenraumeinheit
- Druck entsprechend dem Außenkopf als Standort der Außeneinheit,
- Taupunkt entsprechend dem Innenkopf als Standort der Innenraumeinheit
- Taupunkt entsprechend dem Außenkopf als Standort der Außeneinheit,
- mittlere Durchflussmenge,
- mittlerer Druck,
- Zeit und
- Signal eines Bewegungssensors als Anwesenheitssignal des Benutzers,
die Anordnung umfasst ferner ein Kontrollzentrum (C) zur Steuerung durch eine mobile Vorrichtung, in Zusammenarbeit mit den Aktuatoren der Anordnung, um den Betrieb der Anordnung über die Benutzerschnittstelle der mobilen Vorrichtung (UI) über eine Informationsnetzwerkverbindung zu dem Kontrollzentrum (C) zu steuern,
wobei das Kontrollzentrum der Anordnung eingerichtet ist, Aktuatoren anhand von Messdaten zu steuern, die von Sensoren nach dem Feedback-Prinzip gewonnen werden, so dass mindestens einer der Aktoren wählbar ist aus: elektromechanischen Ventilen, Schaltern, Trocknern, Lüftern, Gebläsen und/oder Pumpen, Schaltern und Aktuatoren, welche die Energiezufuhr der eben erwähnten steuern, ferner wird der Luftstrom im Klimaanlagenkanal (7) vom Aktuator wie zum Beispiel Lüfter und/oder Irisblende gesteuert, wenn dieser über die passende Ansteuerelektronik zu seiner Ansteuerung verfügt.

2. Anordnung nach Anspruch 1, **dadurch gekennzeichnet, dass** die Anordnung zusätzlich zu Gebläse und/oder Lüfter einen Anschluss für die Montage in Übereinstimmung mit dem Klimakanal (7) umfasst.

3. Anordnung nach einem Anspruch 1 oder 2, **dadurch gekennzeichnet, dass** die Anordnung mindestens eine solche Verbindung zu einem Gebläse und/oder Lüfter umfasst, der sich an einem Ende des Raumluftsenkenendes (2) und/oder Außenkopfes als Ende der Außeneinheit (8) und/oder zwischen diesen im Klimakanal (7) befindet.

4. Anordnung nach einem der vorhergehenden Ansprüche, **dadurch gekennzeichnet, dass** die Anordnung ein Kontrollzentrum (C) zur Steuerung durch eine mobile Vorrichtung umfasst, im Zusammenwirken mit den Aktuatoren der Anordnung, um den Betrieb der Anordnung über die Benutzerschnittstelle der mobilen Vorrichtung (UI), über eine Informationsnetzwerkverbindung zu dem Kontrollzentrum (C) zu steuern.

5. Wärmepumpe, **dadurch gekennzeichnet, dass** die Wärmepumpe eine Anordnung nach einem der Ansprüche 1-4 umfasst.

6. Wärmepumpe nach Anspruch 5, **dadurch gekennzeichnet, dass** die Wärmepumpe einen Innenkopf als Innenraumeinheit (B) und einen Außenkopf als Außeneinheit (8) und einen Kanal zur Mediumzirkulation zur Übertragung von Wärme zwischen dem Innenkopf als Innenraumeinheit (B) und Außenkopf als Außeneinheit (8) umfasst, umfassend zusätzlich an seinem Außenkopf als Außeneinheit (8) einen Anschluss für einen Klimakanal (7) zum Leiten von Raumluft von einer Raumluftsenke (2) zum Außenkopf als Außeneinheit (8) zum Bereitstellen einer thermischen Wirkung durch die im Klimakanal (7) geführte Raumluft (A, 2).

7. Wärmepumpe nach Anspruch 5 oder 6, **dadurch gekennzeichnet, dass** der Außenkopf als Außeneinheit und der Innenkopf als Innenraumeinheit zusammen in einer Ganzheit in demselben Chassis integriert sind, wobei die Raumluftsenke (2) in Verbindung mit dem Chassis und/oder vom Raum der Wohnung (A) oder einem Teil (1) davon angeordnet wurde.

8. Wärmepumpe nach Anspruch 5, 6 oder 7, **dadurch gekennzeichnet, dass** zumindest eines aus dem Innenkopf als Innenraumeinheit (B) oder dem Außenkopf als Außeneinheit (8) thermisch von der Gesamtheit isoliert wurde, um die Temperatur der Substanz, die im Klimakanal (7) zwischen dem Innenkopf als Innenraumeinheit (B) und Außenkopf als Außeneinheit (8) verwendet wird, auf der Temperatur entsprechend der Raumluftsenke (2) vor dem Strömungseintritt zum Außenkopf als Außeneinheit (8) zu bewahren.

9. Wärmepumpe nach Anspruch 5, 6, 7 oder 8, **dadurch gekennzeichnet, dass** die Wärmepumpe eine Ventilanordnung (V) zum gegenseitigen Vertauschen der Zirkulationsprozessorte des Innenkopfs als Inneneinheit (B) und Außenkopf als Außeneinheit (8) in der Mediumzirkulation umfasst.

10. Wärmepumpe nach einem der Ansprüche 5 - 9, **dadurch gekennzeichnet, dass** die Wärmepumpe eine Entfeuchtungseinheit umfasst, die so angeordnet ist, dass sie Wasser aus der Strömung des Klimakanals (7) in Strömungsrichtung vor dem Außenkopf als Außeneinheit (8) der Wärmepumpe entfernt.

11. Wärmepumpe nach einem der Ansprüche 5 - 10, **dadurch gekennzeichnet, dass** die Wärmepumpe in ihrem Außenkopf als Außeneinheit (8) einen Klimakanalanschluss für einen Klimakanal (7) aufweist, um die Raumluft von der Raumluftsenke (2) zum Außenkopf als Außeneinheit (8) zu leiten, um eine thermische Wirkung im Außenkopf als Außeneinheit (8) der Wärmepumpe bereitzustellen, zur Verbesserung der COP-Menge der Wärmepumpe.

12. Wärmepumpe nach einem der Ansprüche 5 - 11, **dadurch gekennzeichnet, dass** die Wärmepumpe einen Selbstdiagnoseschaltkreis zur Beobachtung von Wartung und Servicebedarf und/oder zum Melden eines solchen über ein Informationsnetz zwischen dem Kontrollzentrum und dem verwendeten Endgerät (C, UI) umfasst.

13. Wärmepumpe nach einem der Ansprüche 5 - 12, **dadurch gekennzeichnet, dass** mindestens einer der folgenden Außenkopf als Außeneinheit (8) und Innenkopf als Innenraumeinheit (B) an ihm (8, B) einen Lufteinlassanschluss (ivv) aufweist, um Luft über ihn (8, B) zu führen, wobei die Luftführung über den Innenkopf als Inneneinheit (B) die zu führende Luft zum Innenraum, jedoch über den Außenkopf als Außeneinheit (8) zum Außenraum, führt.

14. Wärmepumpe nach einem der Ansprüche 5 - 13, **dadurch gekennzeichnet, dass** sie zum Heizen, Kühlen und/oder Halten der Temperatur auf einem voreingestellten Wert für ein Innenraum eines Gebäudes angeordnet ist.

## Revendications

1. Agencement pour la réduction de la consommation d'énergie d'une pompe à chaleur de type split (8, D, B) dans une commande de chaleur, dans lequel la pompe à chaleur de l'agencement comprend :
- une première partie de traitement de la chaleur (B), tête intérieure en tant qu'unité intérieure (B), étant agencée pour produire un premier effet de commande de chaleur à l'intérieur d'un bâtiment, en transférant la chaleur de l'air intérieur en un milieu (D) dans sa première circulation d'échangeur de chaleur dans la tête intérieure en tant qu'unité intérieure,
- une seconde partie de traitement de la chaleur (8), tête extérieure en tant qu'unité extérieure (8), agencée pour produire un second effet de commande de chaleur à l'extérieur du bâtiment (A) en transférant de la chaleur hors du milieu (D) dans la circulation d'échangeur de chaleur, qui est séparée de ladite première circulation d'échangeur de chaleur, mais est dans une communication d'échange de chaleur, par ledit milieu (D), avec ladite tête intérieure en tant qu'unité intérieure (B) pour transférer la chaleur, entre ladite tête intérieure en tant qu'unité intérieure (B) et la tête extérieure en tant qu'unité extérieure, par le milieu (D), dans lequel l'agencement comprend en plus au moins une connexion de canal de conditionnement d'air (7) pour un canal de conditionnement d'air (7), pour agencer le montage dudit canal de conditionnement d'air par ladite connexion, pour mener de l'air d'intérieur du puits d'air intérieur (2) vers la tête extérieure en tant qu'unité extérieure (8) pour un effet thermique provoqué dessus par l'air intérieur mené par le puits intérieur (A, 2) ;
l'agencement étant **caractérisé en ce qu'**il y a dans l'agencement un agencement à valves de commutation, comprenant des interrupteurs électro-mécaniques et des valves agencés pour commander le débit d'air entrant et/ou changer la direction d'écoulement du milieu et/ou régler l'importance, en se basant sur au moins une des quantités d'observation / de mesure suivantes :
- température selon la tête intérieure en tant qu'emplacement d'unité intérieure,
- température la tête extérieure en tant qu'emplacement d'unité extérieure,
- température du milieu,
- pression selon la tête intérieure en tant qu'emplacement d'unité intérieure,
- pression selon la tête extérieure en tant qu'emplacement d'unité extérieure,
- point de rosée selon la tête intérieure en tant qu'emplacement d'unité intérieure,
- point de rosée selon la tête extérieure en tant qu'emplacement d'unité extérieure,
- débit du milieu,
- pression du milieu,
- temps et
- signal d'un capteur de mouvement en tant qu'un signal de présence de l'utilisateur,
l'agencement comprend en outre un centre de commande (C) pour la commande par un dispositif mobile, en coopération avec les déclencheurs de l'agencement pour commander le fonctionnement de l'agencement par le biais de l'interface utilisateur du dispositif mobile (UI), par une connexion de réseau d'information vers ledit centre de commande (C),
dans lequel le centre de commande de l'agencement est agencé pour commander des déclencheurs selon des données de mesure obtenues par des capteurs en se basant sur le principe de retour, de façon à ce qu'au moins un des déclencheurs puisse être sélectionné à partir de ce qui suit : soupapes électro-mécaniques, interrupteurs, sécheurs, ventilateurs, soufflantes et/ou pompes, interrupteurs et déclencheurs commandant l'alimentation en énergie des sus-mentionnés, le débit d'air supplémentaire dans le canal de conditionnement d'air (7) est commandé par le déclencheur tel qu'un ventilateur et/ou un obturateur iris, lorsque ceux-ci possèdent l'électronique de commande appropriée pour leur commande.

2. Agencement selon la revendication 1, **caractérisé en ce que** l'agencement comprend une connexion supplémentaire à la soufflante et/ou au ventilateur pour le montage en conformité dudit canal de conditionnement d'air (7).

3. Agencement selon la revendication 1 ou 2, **caractérisé en ce que** l'agencement comprend au moins une telle connexion à une soufflante et/ou un ventilateur qui est à une extrémité de l'extrémité du puits d'air intérieur (2) et/ou de l'extrémité de la tête extérieure en tant qu'unité extérieure (8) et/ou entre eux dans le canal de conditionnement d'air (7).

4. Agencement selon l'une quelconque des revendications précédentes, **caractérisé en ce que** l'agencement comprend un centre de commande (C) pour la commande par un dispositif mobile, en coopération avec les déclencheurs de l'agencement pour commander le fonctionnement de l'agencement par le biais de l'interface utilisateur du dispositif mobile (UI), par une connexion de réseau d'information vers ledit centre de commande (C).

5. Pompe à chaleur, **caractérisée en ce que** la pompe à chaleur comprend un agencement selon l'une quelconque des revendications 1 - 4.

6. Pompe à chaleur selon la revendication 5, **caractérisée** ce que la pompe à chaleur comprend une tête intérieure en tant qu'unité intérieure (B) et une tête extérieure en tant qu'unité extérieure (8) et un canal pour la circulation du milieu pour le transfert de chaleur entre lesdites tête intérieure en tant qu'unité intérieure (B) et tête extérieure en tant qu'unité extérieure (8), comprenant en outre, sur sa tête extérieure en tant qu'unité extérieure (8), une connexion pour un canal de conditionnement d'air (7) pour mener de l'air d'intérieur d'un puits d'air intérieur (2) vers la tête extérieure en tant qu'unité extérieure (8) pour fournir un effet thermique par l'air intérieur (A, 2) mené dans ledit canal de conditionnement d'air (7).

7. Pompe à chaleur selon la revendication 5 ou 6, **caractérisée** ce que ladite tête extérieure en tant qu'unité extérieure et ladite tête intérieure en tant qu'unité intérieure sont intégrées ensemble en un tout dans le même châssis, dans lequel le puits d'air intérieur (2) a été agencé en connexion avec le châssis et/ou depuis l'espace de logement (A) ou une partie (1) de celui-ci.

8. Pompe à chaleur selon la revendication 5, 6 ou 7, **caractérisée** ce que qu'au moins une desdites tête intérieure en tant qu'unité intérieure (B) et tête extérieure en tant qu'unité extérieure (8) a été isolée thermiquement dudit tout, pour conserver la température de la substance utilisée dans le canal de conditionnement d'air (7) entre lesdites tête intérieure en tant qu'unité intérieure (B) et tête extérieure en tant qu'unité extérieure (8), dans la température selon le puits d'air intérieur (2) avant l'entrée de débit vers la tête extérieure en tant qu'unité extérieure (8).

9. Pompe à chaleur selon la revendication 5, 6, 7 ou 8, **caractérisée** ce que la pompe à chaleur comprend un agencement de soupape (V) pour permuter virtuellement les emplacements de procédé de circulation de la tête intérieure en tant qu'unité intérieure (B) et de la tête extérieure en tant qu'unité extérieure (8) dans la circulation du milieu.

10. Pompe à chaleur selon l'une quelconque des revendications 5 - 9, **caractérisée en ce que** la pompe à chaleur comprend une unité de déshumidification agencée pour retirer de l'eau de l'écoulement du canal de conditionnement d'air (7), dans la direction de l'écoulement, avant ladite tête extérieure en tant qu'unité extérieure (8) de la pompe à chaleur.

11. Pompe à chaleur selon l'une quelconque des revendications 5 - 10, **caractérisée en ce que** la pompe à chaleur comprend dans sa tête extérieure en tant qu'unité extérieure (8), une connexion de canal de conditionnement d'air pour un canal de conditionnement d'air (7), pour conduire de l'air intérieur du puits d'air intérieur (2) vers la tête extérieure en tant qu'unité extérieure (8) pour fournir un effet thermique dans la tête extérieure en tant qu'unité extérieure (8) de la pompe à chaleur, pour l'amélioration de la quantité de COP de la pompe à chaleur.

12. Pompe à chaleur selon l'une quelconque des revendications 5 - 11, **caractérisée en ce que** la pompe à chaleur comprend un circuit d'auto-diagnostic pour l'observation de la maintenance et du besoin de réparation et/ou pour les reporter par un réseau d'information entre le centre de commande et le terminal utilisé (C, UI).

13. Pompe à chaleur selon l'une quelconque des revendications 5 - 12, **caractérisée en ce qu'**au moins une de la tête extérieure en tant qu'unité extérieure (8) et de la tête intérieure en tant qu'unité intérieure (B) comprend à sa (8, B) une connexion de prise d'air (ivv) pour guider de l'air par le biais de sa (8, B), dans laquelle la conduction d'air par le biais de la tête intérieure en tant qu'unité intérieure (B) conduit l'air pour qu'il soit conduit vers l'espace intérieur, mais par le biais de la tête extérieure en tant qu'unité extérieure (8) vers l'espace extérieur.

14. Pompe à chaleur selon l'une quelconque des revendications 5 - 13, **caractérisée en ce qu'**elle est agencée pour le chauffage, le refroidissement et/ou la conservation de la température en valeur pré-réglée pour un espace intérieur d'un bâtiment.
